# EUROPEAN PATENT SPECIFICATION

(11) **EP 0 280 066 B1**
(45) Date of publication and mention of the grant of the patent: **17.03.1993**
(21) Application number: 88101331.2
(22) Date of filing: 01.07.1983
(51) Int. Cl.: B29C 47/06, B29D 9/00, B29C 47/28, B32B 27/08, B65D 65/40

(54) **Apparatus and method for producing a multi-layered article such as a parison e.g. for making a blowmoulded container**
Vorrichtung und Verfahren zur Herstellung eines mehrschichtigen Gegenstandes, wie z.B. eines Vorformlings, beispielsweise zur Herstellung eines blasgeformten Behälters
Dispositif et procédé pour la fabrication d'un article multicouche, telle qu'une paraison, par exemple pour fabriquer un récipient soufflé

(30) Priority: 29.11.1982 US 445261
(43) Date of publication of application: 31.08.1988
(62) Divisional of application: 83303825.0
(73) Proprietor: AMERICAN NATIONAL CAN COMPANY, Chicago, Illinois 60631 (US)
(72) Inventor: Briggs, Jerald E., St. Charles Illinois 60174 (US); Pfeutzenreuter, Henry, Alta Loma California 91701 (US)
(74) Representative: Jacquet, Michel

(56) References cited:
- US-A- 3 694 292
- US-A- 4 042 661
- US-A- 4 047 868
- TECHN. MITT. KRUPP, vol. 37, no. 1, May 1979, pages 1-12; R. HEGELE et al.: "Herstellung mehrschichtiger Kunststoff-Hohlkörper nach dem Coextrusions-Blasformverfahren"
- TECHN. MITT. KRUPP, vol. 37, no. 1, May 1979, pages 1-12; R. HEGELE et al.: "Herstellung mehrschichtiger Kunststoff-Hohlkörper nach dem Coextrusions-Blasformverfahren"

## Description

This invention relates to apparatus and method for forming a multi-layered parison containing at least two relatively thin layers and one relatively thick layer. The parison may be employed for the formation of containers such as bottles and the like by blow molding.

Multi-layered laminate structures have long been used to make containers for a variety of products wherein, due to industrial requirements and specifications, it is not possible to use containers made from a single plastic material. In packaging foods, liquids such as various juices, sanitary articles and a host of other products, the container wall must withstand attack by oxygen or some of the ingredients of the packaged product which often tend to permeate through the container wall.

It has, by now, become well known to make multi-layered laminate structures from thermoformable plastics and to make containers therefrom by injection molding or blow molding techniques, and numerous thermoplastic resins have been disclosed and recommended for this purpose. Some of these thermoplastic materials and the composite laminated structures made therefrom are described in US-A Nos. 3,560,325; 3,595,740; 3,882,259; 3,955,697; 4,182,457 and 4,234,663, to cite a few.

Various apparatuses for forming a multi-layered parison and blow molding the parison into a container of the desired shape are known. See, for example, US-A Nos. 4,047,868; 4,297,092; 3,802,826; 3,447,204; 3,478,139; 3,546,743; 4,042,661; 4,125,585; 4,134,952; 4,152,104; and 4,281,981. The common features of these apparatuses include an annular discharge flow passageway formed between a cylindrical flow tube and a die body, an annular discharge orifice at the downstream end of the annular discharge flow passageway through which the parison or multi-layered laminate structure is extruded, feed passageways which supply resin material to the apparatus for an individual resin layer and connecting passageways which join the feed passageways to the annular discharge flow passageway at junctions where an individual resin layer is added to the multi-layered laminate flowing from upstream of the junction.

In US-A 4,047,868 the use of pressure rings to control the relative flow of resin materials in the connecting passageways and the thickness of the individual layers is taught. Use of annular accumulation chambers to distribute material flowing into the feed passageways circumferentially to form more uniform layers is taught in US-A Nos. 4,297,092; 4,152,104; 4,042,661; 3,546,743; 3,478,139; and 3.447,204. Rotation of the die body about the mandrel, to provide more uniform layers, is described in US-A 3,802,826. Methods of controlling thickness and concentricity of the layers are taught in US-A 4,047,868; 3,546,743 and 3,446,204.

A principal object of the various apparatuses disclosed in the patents mentioned above was to produce multi-layered structures with good roll geometry, that is a gauge thickness of substantially uniform depth across the width of the structure. Another object was to provide uniform deposition of a relatively thin molten layer of a polymer onto a relatively thick molten layer of another polymer under conditions of laminar flow without causing turbulence leading to fusion of the molten layers, uneven laydown of one layer upon the other or abberations which ultimately lead to delaminations when the finished product is subjected to mechanical stress.

US-A 3,694,292 acknowledges that great difficulty can be experienced when extruding polymers to form a laminated article comprising two structural layers bonded together by a thin intervening liquid bonding layer. The difficulty lies in distributing the single thin layer evenly between the surfaces to be bonded thereby so that a permanent, uniform bond free from streaks and non-bonded areas is obtained. US-A 3,694,292 claims to overcome the difficulty by merging the liquid bonding layer with one of the structural layers at a location within an extruding head close to the exit of the head, whereat pressure conditions are thought to be favourable to a uniform distribution of the liquid bonding layer. In the result, US-A-3,694,292 discloses an improved way of making a laminate for tubular blown film comprising three layers, two thick and one thin, the latter being the central bonding layer.

The problems noted above are particularly acute when a plurality of relatively thin layers is to be laminated to a relatively thick layer. For example, a container might be formed with an inner layer, an adhesive layer and an oxygen barrier layer. The inner layer may be formed with a thermoplastic polyolefin, the adhesive layer with a carboxylic acid modified polyolefin and the barrier layer (if oxygen is to be excluded) of a saponified copolymer of ethylene and vinyl acetate. The two first-mentioned polymers are relatively inexpensive. Polymers of the last-mentioned type polymers are specialty chemicals and quite expensive. For economic reasons, therefore, it is important that the expensive polymers be laid down in thin layers. It is equally important, for in-use performance, that the thin layers have good roll geometry, that they completely cover the thick layer(s) and that there be no weak areas subject to delamination under mechanical stress. These ends are difficult to achieve in conventional equipment utilized for the preparation of parisons for blow molding.

US-A 3,694,292 does not contemplate the production of laminates comprising a plurality of thin layers and a thicker layer. The present invention addresses this objective by combining a plurality of thin layers into a laminate for joining them as a unit with another, thicker layer.

Thanks to the apparatus and process of this invention, a multi-layered parison for blow molding can be made reliably despite variations in the thicknesses of its constituent layers, and the layers of the parison exhibit uniform thicknesses and concentricity.

A multi-layer laminate structure obtainable by use of the invention can comprise an outer thermoplastic polyolefin layer, an inner thermoplastic polyolefin layer and a thin intermediate oxygen barrier layer. The outer and inner polyolefin layers are preferably made of polypropylene, particularly crystalline isotactic polypropylene, and the intermediate barrier layer is preferably made of ethylene-vinyl alcohol copolymer. A thin adhesive layer bonds the inner polyolefin layer to the intermediate barrier layer.

In order to make a container, the multi-layer structure is coextruded into a parison tube which is then placed in a blow mold and inflated by injection of air, under pressure, to form the container.

According to the present invention there is provided extrusion apparatus for producing a multi-layer polymeric article, such as a parison, which comprises a plurality of layers that individually are thinner than at least one other layer of the article, the apparatus including means forming separate tubular extrusion channels, means for feeding a first polymer material to a first of the channels for extrusion therealong to an extrusion orifice of the apparatus to form a relatively thick layer of the extruded article, and means for feeding a plurality of polymeric materials successively to a second of the channels for extrusion from the apparatus as thinner layers of the article, the separate tubular channels being arranged one within the other within an elongated extrusion die assembly, the first tubular channel having an upstream portion to which a polymer material to form a thick layer of the article is fed in use to provide a flow of said polymer material towards the orifice, and the second tubular channel merging with the first tubular channel at an intermediate location therealong to deliver into the first channel, and into confluence with the polymer flow therein, a tubular laminate assembled therein and composed of thin layers of the plurality of polymer materials successively fed to the second channel, the first channel having a downstream portion extending from the intermediate location whereat the second channel merges with the first to convey to the orifice a multi-layer polymer flow comprising said plurality of thinner layers and a thicker layer.

According to a second aspect of the invention, there is provided a process of making a multi-layer polymeric article, such as a parison for use in making a blow-molded container, which article has a plurality of layers which individually are thinner than at least one other layer of the article, wherein a polymer to form a thicker layer of the article is fed along a first tubular channel toward an extrusion die orifice, and a plurality of polymers to form thinner layers of the article are successively fed to a second tubular channel to form a laminate of the thinner polymer layers therein, a flow of the polymer to form the said thicker layer is provided in an upstream portion of the first channel, and a flow of said laminate of the thinner layers formed in the second channel is caused to merge into confluence with the said polymer flow at an intermediate location along the first channel there to form a multi-layer polymer flow including a plurality of thinner layers and a thicker layer, and the multi-layer flow is coextruded along a downstream portion of the first channel to the said orifice for extrusion therefrom.

A multi-layer plastics container obtainable by use of the present invention can comprise a container wall which is made of a multi-layer laminate structure comprising an outer thermoplastic polyolefin layer, an inner thermoplastic polyolefin layer and a thin intermediate barrier layer; a thin first adhesive layer for adhesively joining said inner thermoplastic polyolefin layer to said barrier layer, and a thin second adhesive layer for adhesively joining said barrier layer to the outer thermoplastic layer.

A specific apparatus according to the present invention, for producing multi-layer parisons of polymeric materials wherein at least two of said layers are relatively thin compared to at least one other layer, comprises means including a tubular channel for forming a relatively thick layer of a first polymeric material and means including a second channel for forming a laminate of at least two thin layers to be disposed around the surface of the thick layer of polymeric material. The said means includes a segmented die block, each segment of which is formed with a polymeric accumulation reservoir. The die block is formed around said tubular channel and has a first passageway leading from an accumulation reservoir in a first segment, said passageway in use being charged with a second polymeric material from the said accumulation reservoir. The die block has a second passageway leading from an accumulation reservoir in a second segment of the die block and this passageway in use is charged with a third polymeric material from said second accumulation reservoir. The first and second passageways are defined between facing surfaces of adjacent segments and lead in turn to said second channel whereby in use a laminate is formed in said die block composed of said second and third polymeric material. The laminate is thereafter fed around said first polymeric material in said tubular channel.

The various aspects of this invention will now be described in more detail, by way of example only, with reference to the accompanying drawings, in which:
Figure 1 is a sectional view of a preferred embodiment of the apparatus according to this invention for forming multi-layered parisons;
Figure 2 is an enlarged sectional view of the preferred embodiment shown in Figure 1;
Figure 3 is a schematic illustration of an apparatus according to this invention which particularly illustrates its principal features; and
Figure 4 is a schematic sectional view illustrating the arrangements of the various layers of a six layer laminate structure, made in accordance with a preferred embodiment of this invention.

According to the broad principles of this invention, the several layers are first coextruded to form a parison tube which is then molded and shaped into the desired container form. It must be mentioned, however, that formation of parison tubes and containers therefrom are well known techniques in the plastics industry. For example, one such method is described in US-A 4,079,850 wherein a multi-layer resin system in the molten state is formed into a parison by coextrusion. A pair of split molds are disposed around the parison, the split molds having such a configuration that when they are in registry with each other, they define a cavity which corresponds to the shape of the desired container. By injecting air, under pressure, the parison is blow molded to form the container.

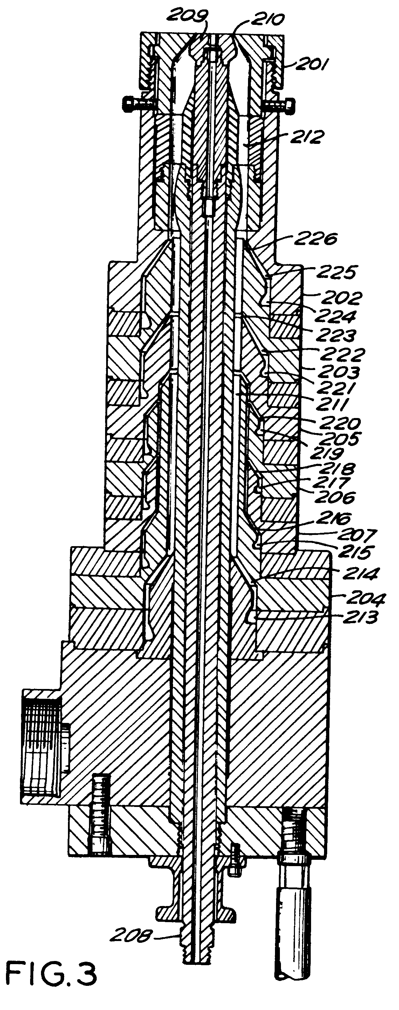

The apparatus of this invention comprises extrusion molding apparatus in which two or more relatively thin layers of polymeric material are formed into a laminate within the apparatus before being joined to one or more relatively thick layers. The principle will be well understood by reference to Figure 3. For convenience, the various parts of the apparatus will be broadly defined with reference to Figure 3 and only the principal parts will be identified. They will be more specifically described with reference to the other Figures.

Figure 3 schematically represents an apparatus of the invention including a segmented die block with an extrusion die block segment 201; principal subextrusion die block segments 202, 203 and 204; and subextrusion die block segments 205, 206 and 207.

There is a hollow central flow tube 208 terminating in a core pin 209 the end portion of which terminates at an orifice 210 in the extrusion block 201. There is a principal tubular channel 211 around the flow tube communicating with a delivery channel 212 and with various passageways for polymer materials to be described hereinafter.

The schematic apparatus of Figure 3 is designed to produce a preferred laminated structure 100 of this invention illustrated in Figure 4. In Figure 4 there is an inner thermoplastic polyolefin layer 105 and progressing outwardly a first adhesive layer 109, an oxygen barrier layer 107, a second adhesive layer 113, another thermoplastic layer 111, and an outer thermoplastic polyolefin layer 103. The inner and outer layers and said other thermoplastic layer may be regarded as structural layers and, as will be seen, they are relatively thick, of the order of 12 to 18 mils (0.30 to 0.46 mm). The adhesive and barrier layers are relatively thin, i.e. 0.5 to 2 mils (0.013 to 0.051mm). A particular advantage of the apparatus disclosed herein is that it makes it possible to form extremely thin layers completely around a facing surface of relatively thick layers in a uniform manner, while avoiding the problems noted above.

Reverting now to Figure 3, the inside structural layer is formed from a polymer in principal subextruder die block 204 which is formed with a polymer accumulation reservoir 213. There is a passageway 214 leading from the reservoir to the principal tubular channel 211. Adhesive layer 109 is extruded from auxiliary subextrusion die block 207 with accumulation reservoir 215 and second passageway 216 which leads into first passageway 214. Barrier layer 107 is extruded from subextrusion die block 206 with accumulation reservoir 217 and associated passageway 218 which leads into the passageway 216. The second adhesive layer 113 is extruded from auxiliary subextrusion die block 205 with accumulation reservoir 219 and third passageway 220 leading to passageway 216.

After the juncture of said passageway 216 with passageways 218 and 220, the said passageway joins the principal tubular channel. There is thus formed within the extrusion apparatus a laminate composed of the thin adhesive layers and the barrier layer. This laminate is brought into confluence with the thick inner layer within the extrusion apparatus.

The layer 111, e.g. composed of a mixture of thermoplastic polymers, is extruded from principal subextruder 203 formed with accumulation reservoir 221 and passageway 222. It forms a junction with the principal tubular channel 211 at junction 223.

The outer layer 103 is extruded from principal subextrusion block 202 having an accumulation chamber 224 and an associated delivery passageway 225, the latter joining the principal tubular channel 211 at junction 226.

The principal tubular channel joins the delivery channel 212 and the six layered parison exits the apparatus around pin 209 through exit orifice 210.

As will be explained more fully hereinafter, in preferred embodiments of the invention the flow tube is programmable, that is it can move vertically within a fixed tube or mandrel. The size of the orifice 210 can also be adjusted.

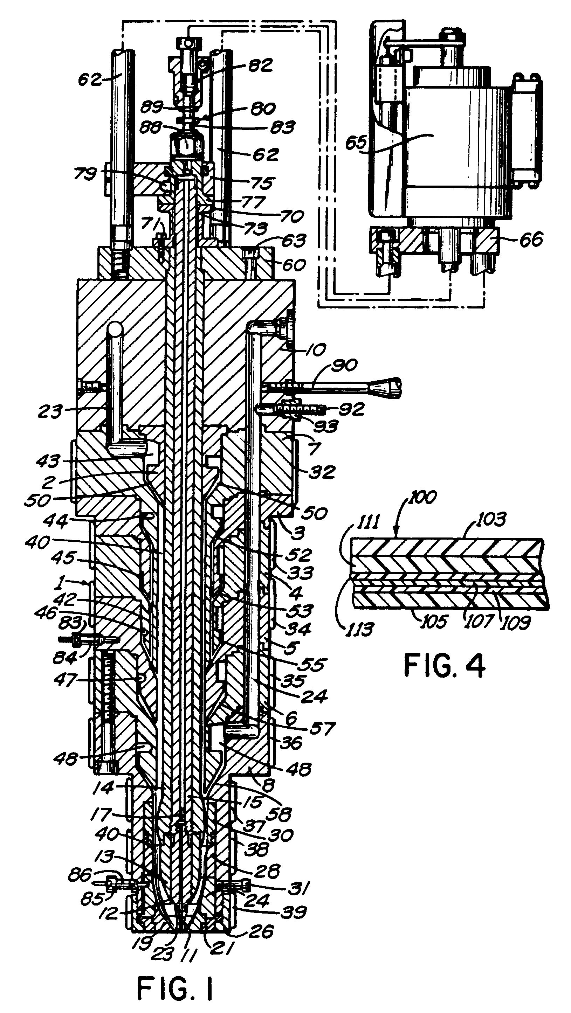

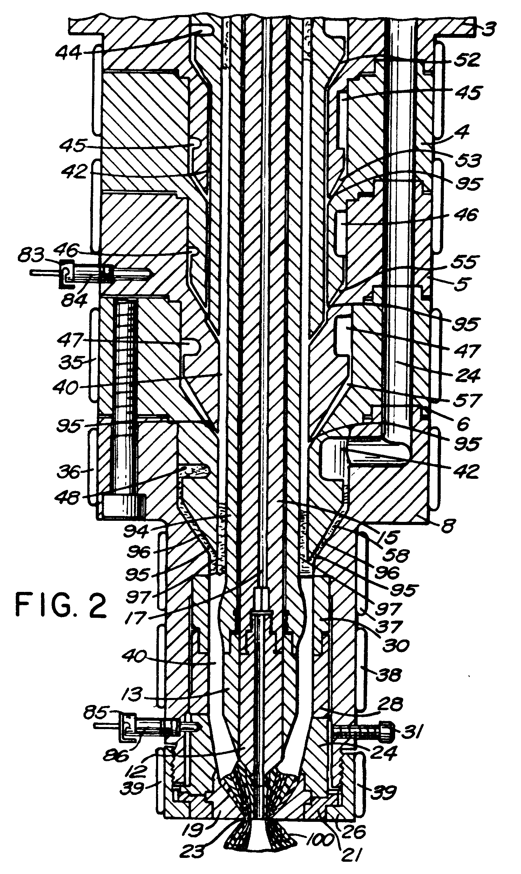

The invention will now be explained in more detail with reference to Figures 1 and 2. While the description will refer principally and for purposes of illustration to the preferred embodiments, those skilled in the art will recognize that many variations from the embodiments actually described are possible without departing from the invention. For example, certain of the layers, such as the layer 111 or the outside layer can be omitted. The apparatus can be arranged to form a three layered structure of thick structural layer and thin adhesive and barrier or other layer. The apparatus can be arranged so that the thick layer is the inner or the outer layer. More principal subextruders can be added to the vertically arranged subextruder column to form laminated structures with more than six layers.

The preferred apparatus 1 for forming a multi-layered parison tube according to this invention is shown in Figures 1 and 2. The apparatus comprises a segmented die block including a set of principal and auxiliary subextruders 7, 3, 4, 5, 6 and 8 arranged vertically and in this order from top to bottom as shown, to define a longitudinal direction. The die block is mounted on an adapter block 10. A substantially cylindrical mandrel 14 passes through coincident central holes in extruders 7, 3, 4, 5, 6, and 8 and adapter block 10. The annular space between mandrel 14 and the extruders 7, 3, 4, 5, 6 and 8 defines a principal annular discharge channel 40 through which the multi-layered laminate flows. The mandrel 14 has a concentric central cylindrical cavity through which a programming flow tube 15 passes. The flow tube is vertically moveable within the mandrel. A blow pin 11 is mounted at the downstream end portion of mandrel 14 on a cylindrical pin holder 12 which is attached directly to programming flow tube 15. The pin holder 12 is held in position by a pin holder sleeve 13 attached to the downstream cod of mandrel 14. There is thus defined a hollow unit through which air or other gas may be forced to blow mold the parison.

A principal subextruder 8 comprises the downstream end of the segmented die block and, as shown, has an upstream cylindrical portion of substantially greater radius than its downstream portion. The exterior surface of the tip end portion of subextruder 8 is threaded to engage and hold an end cap 26 which consists of a cylindrical pipe portion whose interior surface is threaded and which has an interiorly directed lip. A bushing ring 21, which forms a seat for bushing 19, is shaped to be held in place by end cap 26. Bushing 19 has a central interior nozzle cavity which forms a central annular orifice 23 surrounding but spaced from the blow pin 11 to form an exit orifice through which the multi-layered laminate can be extruded.

The cylindrical, central cavity of subextruder 8 has additionally three pipe-shaped pieces, to wit a bushing adapter 24, a lower adapter sleeve 28, and an upper adapter sleeve 30 mounted therein in tandem from bottom to top whose interior surfaces together with the exterior surface of the mandrel 14 define the downstream portion or delivery channel of the principal tubular discharge channel 40.

The downstream end of bushing adapter 24 abuts against bushing 19 and bushing ring 21. The concentricity of the extrudate may be partially controlled by an axially disposed adapter set screws 31 passing through top block 8 to press against bushing adapter 24.

In the preferred embodiment shown, a central longitudinal air shaft 17 passes through programming flow tube 15, pin holder 12, and blow pin 11 and provides a means by which air or other vapor is introduced to prevent the parison walls from collapsing during extrusion and to blow mold the parison.

Each of the subextruder die blocks 6, 5, 4, 3, and 7 comprises a cylindrical top portion with a central hole therein and a downstream sleeve portion so conformed to fit into the cylindrical top portion of the adjacent extruder or subextruder so as to form annular accumulation reservoirs 48, 47, 46, 45, 44 and 43 in the segmented die block to hold the melted thermoplastic resin material used for each individual layer of the six-layered laminate. Resin material is fed to each of the reservoirs 48, 47, 46, 45, 44 and 43 from an external source which is not shown. The resin is distributed circumferentially by feed passageways, die blocks 6, 5, 4, 3 and 7 and adapter block 10. The annular accumulation reservoir 48 between principal subextruder die blocks 6 and 8 is fed by feed passageway 24 having an axially disposed inlet in adapter block 10. Annular accumulation reservoir 43 in die block 7 is formed between flow sleeve 2 and principal subextruder die block 6, and is fed by feed passageway 23.

The feed passageways can be equipped with a regulating system such as pressure transducer 90 and a choke pin 92 mounted in choke pin adapter 93 for regulating the flow rate of polymeric material. The accumulation reservoirs 43, 47 and 48 in die blocks 7, 6 and 8 are connected directly to the principal tubular discharge flow channel 40 by annular connecting passageways 50, 57 and 58. However, the annular discharge reservoirs 44, 45 and 46 are connected to an auxiliary discharge flow channel 42 instead, by way of annular connecting passageways 52, 53 and 55. At its downstream end, the auxiliary discharge channel 42 connects with the principal flow channel 40.

Auxiliary discharge flow channel 42 is substantially smaller in diameter than principal tubular flow channel 40 to which it is connected. The use of an auxiliary discharge flow channel 42 allows preforming of a three-layered laminate consisting of two adhesive layers and a barrier layer which may be formed completely around the inner layer without causing imperfections in the final products.

It will be understood from the description and from the figures that the accumulation reservoirs and the polymer passageways leading from the accumulation reservoirs to the first or auxiliary passageway and to the principal tubular channel 40 may be defined by facing surfaces of adjacent extruders. They may be, however, conveniently formed in the individual extruder blocks themselves. This is especially true of the accumulation reservoirs.

The passageways are tapered, i.e. each has a diameter at the downstream end less than the diameter at the end closer to the accumulation reservoirs. Therefore, the pressure of the molten polymer at the downstream end is greater that at the upstream end. As a result, the stream of molten resin becomes laminar flow so that there is reduced turbulence as each polymer stream joins another polymer stream flowing in one or other passageway 40, 42.

Heat may be supplied to the die block by any convenient means. The extruders and subextruders may be insulated by ceramic bands 39, 38, 37, 36, 35, 34, 33 and 32 as shown. Thermocouples may be mounted in the extruders and subextruders 8, 6, 5, 4, 3 and 7. As shown, for example, thermocouple 85 is mounted in adapter 86 and senses the temperature in principal subextruder 8 and thermocouple 83 in adapter 84 senses the temperature in auxiliary subextruder 5.

The blow pin 11 is positioned by a pin orientation bar 75 axially attached to and holding the programming flow tube 15 by bar adapter 77. Orientation bar 75 is held in position by a clamp pin 79, and a bar adapter 77 is supported atop adapter block 10 by a cylindrical flanged bushing 70 attached to a mounting plate 60 which is fixed to adapter block 10 by mounting bolt 63. Air is admitted to air shaft 17 by means of a couplet 80 which passes air to the end of programming flow tube 15 through bar adapter 77 from air inlet 82.

Movement of programming flow tube 15 within mandrel 14 may be controlled by an electronic parison programmer 65, for example, a Hunker Programmer available from Hunker Acroboratories, Inc. The programmer 65 is attached to programmer base plate 66 which is connected to mounting plate 60 by tie rods 62.

In the preferred practice of this invention as illustrated in Figure 4, the laminate structure has an intermediate gas and oxygen barrier layer of ethylene-vinyl alcohol copolymer, outer and inner structural layers of a thermoplastic polyolefin, a further thermoplastic layer adjacent to the outer polyolefin layer and two adhesive layers, one interposed between the intermediate barrier layer and the further thermoplastic layer, and the other interposed between the intermediate barrier layer and the inner polyolefin layer.

The polyolefins which are suitable in forming the outer and inner layers of the laminate structure are thermoplastic olefinic polymers such as e.g., high and low density polyethylene, polypropylene and blends of these.

Both adhesive layers are preferably made of maleic anhydride modified polypropylene wherein the polypropylene backbone is modified with maleic anhydride moieties. One such adhesive is available from Mitsui, Japan, under the Trademark ADMER QB 530. In general, however, polypropylene modified with ethylenically unsaturated carboxylic anhydrides may be used as the adhesive layers for the present laminate structure.

It must be stated that the aforementioned adhesives are particularly well suited when polypropylene or propylene - ethylene random copolymers constitute the outer and inner structural layers. However, when either or each of these layers is made of polyethylene, it is preferable to use a different adhesive in contact therewith such as, for example, the Plexar adhesives manufactured by Chemplex Company, Rolling Meadows, Illinois. These adhesives are a blend of ethylene-vinyl acetate copolymer and a graft copolymer of polyethylene and a dicarboxylic acid anhydride.

As mentioned above, the multi-layer laminate structure generally designated as 100 has an outer polyolefin structural layer 103, an inner polyolefin structural layer 105 and an intermediate oxygen barrier layer 107. The inner polyolefin layer 105 is adhesively bonded to the intermediate barrier layer 107 by the adhesive layer 113.

All the layers are coextensively bonded along their respective junctions with no interlaminar separation between the respective layers of the laminate structure.

In order to form the laminate structure, the thermoplastic resins used to make the different layers are coextruded in the molten state through an extrusion apparatus, preferably an embodiment of the apparatus described herein, to form the parison tube. The parison tube is then blow molded by injection of air or other vapor, under pressure, and is shaped into a container in a separate container mold, not shown.

While the invention has heretofore been described with particularity and illustrated by reference to a 6-layer laminate structure, several changes and modifications are suggested from the foregoing disclosure which are nevertheless within the scope of this invention. For example, additional layers may be used for decorative purposes, or otherwise.

The invention comprehends the making of a 5-layer laminate structure, and the production of containers therefrom.

Containers having excellent oxygen barrier properties and good transparency can be made by varying the relative thicknesses of the different layers. For example, excellent barrier properties and good transparency can be obtained from the multi-layer structure of this invention when the thickness of the ethylenevinyl alcohol layer is about 0.5 to 2 mils (0.013 to 0.051 mm).

## Claims

1. Extrusion apparatus for producing a multi-layer polymeric article, such as a parison, which comprises a plurality of layers that individually are thinner than at least one other layer of the article, the apparatus including means forming separate tubular extrusion channels (40, 211; 42,216), means (43, 213) for feeding a first polymer material to a first of the channels (40, 211) for extrusion therealong to an extrusion orifice (23, 210) of the apparatus to form a relatively thick layer of the extruded article, and means (44-46; 215, 217, 219) for feeding a plurality of polymeric materials successively to a second of the channels (42; 216) for extrusion from the apparatus as thinner layers of the article, the separate tubular channels (40, 42; 211, 216) being arranged one within the other within an elongated extrusion die assembly, the first tubular channel (40, 211) having an upstream portion to which a polymer material to form a thick layer of the article is fed in use to provide a flow of said polymer material towards the orifice (23, 201), and the second tubular channel (42, 216) merging with the first tubular channel at an intermediate location therealong to deliver into the first channel, and into confluence with the polymer flow therein, a tubular laminate assembled therein and composed of thin layers of the plurality of polymer materials successively fed to the second channel, the first channel (40, 211) having a downstream portion extending from the intermediate location whereat the second channel merges with the first to convey to the orifice (23, 201) a multi-layer polymer flow comprising said plurality of thinner layers and a thicker layer.

2. Apparatus according to claim 1, having further means (48, 58; 47, 57; 221-223; 224-226) for conveying at least one other tubular polymer flow into the first channel (40, 211), the further means merging with the downstream portion of the first channel in use to bring the said at least one tubular flow into confluence with the multi-layer flow therein.

3. Apparatus according to claim 1 or claim 2, including a segmented die block, the segments whereof being formed with polymer accumulation reservoirs (e.g. 43 to 48; 213, 215, 217, 219, 221, 224) , the die block being formed around the first tubular channel (40, 211) which is located within the second tubular channel (42, 216), there being a first passageway (52) leading to the second channel from an accumulation reservoir (44, 215) of a first segment (3, 207) to be charged with a first polymer material from the said accumulation reservoir, and a second passageway (53, 218) leading to the second channel from an accumulation reservoir (45, 217) of a second segment (3, 207) to be charged with a second polymer material from the latter accumulation reservoir; the first and second passageways being defined between facing surfaces of adjacent segments (7, 3; 3, 4; 204, 207; 207, 206), whereby in use a laminate is formed within the second channel (42, 216) composed of the first and second polymer materials, which is thereafter fed around the polymer material flow in the first tubular channel (40, 211).

4. An apparatus according to claim 3, having a third die block segment (4, 206) formed with an accumulation reservoir (46, 219) for another, third polymer material and a third passageway (55, 220) leading into the second channel (42, 216), the apparatus further having a fourth die block segment (6, 203) formed with an accumulation reservoir (48, 224) for a polymer material and a passageway (58, 225) leading therefrom into the first tubular channel (40, 211) downstream of the junction of the second channel (42, 216) with the first channel (40, 211), the apparatus permitting the formation of a structure comprising a thermoplastic polyolefin structural layer followed in order by an adhesive layer, an oxygen barrier layer, and a second adhesive layer and a second thermoplastic polyolefin structural layer, the adhesive and barrier layers individually being thin relative to the two structural layers.

5. An apparatus according to claim 4, further including a fifth die block segment (5, 205) formed with an accumulation reservoir (47, 221) for a further polymeric material, a passageway (57, 222) leading from the reservoir (47, 221) and into the first tubular channel (40, 211) intermediate junctions therewith of the second channel (42, 216) and the passageway (58, 225) leading from the accumulation reservoir (48, 224) of the fourth die segment (6, 203).

6. An apparatus according to claim 1, characterised by
a. A hollow flow tube (15, 208) having a hollow core pin (12, 209) at a discharge end portion of the apparatus;
b. A segmented die block comprising an extrusion die block segment (8, 202) at the end portion of the apparatus formed with an interior surface coacting with the core pin (12, 209) to form a delivery channel (40, 212) for the flow of multiple layers of polymers, the extrusion die block segment (8) and core pin (12, 209) also defining an annular orifice (23, 210) through which a multi-layer parison exits the apparatus, and
c. A plurality of subextrusion die block segments located upstream of the extrusion die block segment (8) and comprising at least one principal subextrusion die block segment (7, 204) surrounding the flow tube to form therewith an annular opening forming the first tubular channel (40) for flow of a first or structural layer of polymeric material into the delivery channel and at least two adjacent auxiliary subextrusion die block segments (3, 4 or 206, 207) each formed with an accumulation reservoir (44, 45 or 215, 217) and passageways leading therefrom to the second channel (42 or 216) which is narrower than the first tubular channel (40, 211); the said passageways being defined between facing surfaces of adjacent subextrusion die block segments (7, 3, 4 or 204, 207, 206), the apparatus permitting the formation of a laminate comprising thin layers of first and second polymeric materials which laminate is thereafter fed from the second channel (42, 216) completely around a thick layer of polymeric material in the first tubular channel.

7. An apparatus according to claim 6, comprising at least one additional subextrusion die block segment (5, 205) formed with an accumulation reservoir (46, 219) and a passageway (55, 220) which communicates with the first tubular channel (40, 211).

8. An apparatus according to claim 6 or claim 7, further including a subextrusion die block segment (4, 206) formed with a polymer accumulation reservoir (46, 219) and a passageway (55, 220) leading therefrom into said second channel (42, 216), and by another principal subextrusion die block segment (8, 202) formed with an accumulation reservoir (48, 224) and a passageway (58, 225) leading into the main tubular channel (40, 211) downstream of the junction whereat the second channel meets the first channel, the apparatus permitting formation of a parison comprising an inner thermoplastic polyolefin structural layer (105) followed outwardly by an adhesive first layer (109), an oxygen barrier second layer (107), an adhesive third layer (113) and an outer thermoplastic polyolefin structural layer (103), the adhesive and barrier layers being relatively thin compared with the said structural layers.

9. An apparatus according to claim 8, including a further principal subextrusion die block segment (5, 205) formed with an accumulation reservoir (47, 221) and a passageway (57, 222) leading into the first tubular channel (40, 211) intermediate the junctions therewith of the second channel and the passageway (58, 225) for the outer structural layer, the apparatus permitting the insertion of a further layer of polymeric material between a structural layer and an adjacent adhesive layer of the parison.

10. An apparatus according to any of claims 6 to 9, wherein the flow tube (15, 208) is cylindrical and programmable and is associated with a cylindrical mandrel (14) which fits slidably over the programming tube, within which the flow tube (15, 208) is vertically movable.

11. Apparatus according to claim 10, wherein the first tubular channel (40, 211) is an annular space surrounding the mandrel (14) and defined by an opening in at least the said one principal subextrusion die block segment (7, 204) through which the mandrel (14) extends, and the passageways leading from the accumulation reservoirs of the subextrusion die block segments are tapered.

12. An apparatus according to any of claims 1 to 11, further characterised by means (e.g. 65) for adjusting the size of the discharge orifice (23, 210) through which the multi-layer parison exits the apparatus.

13. A process of making a multi-layer polymeric article, such as a parison for use in making a blow-molded container, which article has a plurality of layers which individually are thinner than at least one other layer of the article, wherein a polymer to form a thicker layer of the article is fed along a first tubular channel (40, 211) toward an extrusion die orifice (23, 210), and a plurality of polymers to form thinner layers of the article are successively fed to a second tubular channel (42, 216) to form a laminate of the thinner polymer layers therein, a flow of the polymer to form the said thicker layer is provided in an upstream portion of the first channel (40, 211), and a flow of said laminate of the thinner layers formed in the second channel (42, 216) is caused to merge into confluence with the said polymer flow at an intermediate location along the first channel (40, 211) there to form a multi-layer polymer flow including a plurality of thinner layers and a thicker layer, and the multi-layer flow is coextruded along a downstream portion of the first channel (40, 211) to the said orifice (23, 210) for extrusion therefrom.

14. A process according to claim 13, wherein the said laminate in the second channel (42, 216) is caused to flow completely around the polymer flow in the first channel (40, 211) upon merging therewith, and either one layer or two further polymer layers thicker than said laminate layers are brought into confluence with the laminate so as to flow completely therearound.

15. A process according to claim 13 or claim 14, wherein the laminate formed in the second channel (42, 216) in order comprises an adhesive layer (109), a barrier layer (107) and an adhesive layer (113), and the coextruded flow proceeding along the downstream portion of the first channel to the die orifice (23, 210) includes a thicker layer comprising a thermoplastic polyolefin layer (103 and/or 105).

## Patentansprüche

1. Extrusionsvorrichtung zur Herstellung eines mehrschichtigen polymeren Gegenstandes wie eines Vorformlings, der eine Vielzahl von Schichten umfasst, die jeweils dünner als wenigstens eine andere Schicht des Gegenstandes sind, wobei die Vorrichtung Einrichtungen zum Ausformen getrennter rohrförmiger Extrusionskanäle (40, 211; 42, 216), Einrichtungen (43, 213) zum Zuführen eines ersten Polymermaterials zu einem ersten der Kanäle (40, 211) zur Extrusion entlang desselben zu einer Extrusionsdüsenöffnung (23, 210) der Vorrichtung, um eine relativ dicke Schicht des extrudierten Gegenstandes zu bilden, und Einrichtungen (44-46; 215, 217, 219) zum Zuführen mehrerer polymerer Materialien nacheinander zu einem zweiten der Kanäle (42; 216) zur Extrusion von der Vorrichtung als dünne Schichten des Gegenstandes umfasst, wobei die getrennten rohrförmigen Kanäle (40, 42; 211, 216) einer innerhalb des anderen innerhalb einer langgestreckten Extrusionsdüsenanordnung angeordnet sind, der erste rohrförmige Kanal (40, 211) einen stromaufwärts gelegenen Abschnitt aufweist, dem ein Polymermaterial zur Bildung einer dicken Schicht des Gegenstandes im Betrieb zugeführt wird, um einen Strom aus diesem Polymermaterial in Richtung auf die Düsenöffnung (23, 201) zu liefern, und der zweite rohrförmige Kanal (42, 216) mit dem ersten rohrförmigen Kanal an einer Zwischenstelle entlang dessen Länge zusammenläuft, um ein rohrförmiges darin angesammeltes Laminat, das aus dünnen Schichten einer Vielzahl von Polymermaterialien zusammengesetzt ist, die nacheinander dem zweiten Kanal zugeführt worden sind, in den ersten Kanal abzugeben und zum Zusammenfließen mit dem darin befindlichen Polymerstrom zu bringen, und der erste Kanal (40, 211) einen stromabwärts gelegenen Abschnitt aufweist, der sich von der Zwischenstelle, bei der sich der zweite Kanal mit dem ersten vereinigt, erstreckt, um der Düsenöffnung (23, 201) einen mehrschichtigen Polymerstrom zuzuführen, der die Vielzahl der dünnen Schichten und eine dickere Schicht umfasst.

2. Vorrichtung nach Anspruch 1, die weitere Einrichtungen (48, 58; 47, 57; 221-223; 224-226) zum Fördern wenigstens eines weiteren rohrförmigen Polymerstromes in den ersten Kanal (40, 211) aufweist, wobei die weiteren Einrichtungen mit dem stromabwärts gelegenen Abschnitt des ersten Kanals zusammenlaufen, um im Betrieb den besagten wenigstens einen rohrförmigen Strom zum Zusammenfließen mit dem darin befindlichen mehrschichtigen Strom zu bringen.

3. Vorrichtung nach Anspruch 1 oder Anspruch 2, die einen segmentierten Düsenblock umfasst, dessen Segmente mit Polymer-Sammelreservoiren (z.B. 43 bis 48; 213, 215, 217, 219, 221, 224) ausgeformt sind, wobei der Düsenblock um den ersten rohrförmigen Kanal (40, 211) herum ausgeformt ist, der innerhalb des zweiten rohrförmigen Kanals (42, 216) gelegen ist, ein erster Durchgangsweg (52) vorhanden ist, der zu dem zweiten Kanal von einem Sammelreservoir (44, 215) eines ersten Segments (3, 207) führt, der mit einem ersten Polymermaterial von dem Sammelreservoir beladen werden soll, und ein zweiter Durchgangsweg (53, 218) zu dem zweiten Kanal von einem Sammelreservoir (45, 217) eines zweiten Segments (3, 207) führt, der mit einem zweiten Polymermaterial von dem letzteren Sammelreservoir beschickt werden soll; der erste und zweite Durchgangsweg zwischen sich gegenüberliegenden Oberflächen benachbarter Segmente (7, 3; 3, 4; 204, 207; 207, 206) begrenzt ist, wodurch im Betrieb ein Laminat innerhalb des zweiten Kanals (42, 216) gebildet wird, das aus dem ersten und dem zweiten Polymermaterial zusammengesetzt ist, welches danach um den Polymermaterialstrom in dem ersten rohrförmigen Kanal (40, 211) zugeführt wird.

4. Eine Vorrichtung nach Anspruch 3, die ein drittes Düsenblocksegment (4, 206) aufweist, das mit einem Sammelreservoir (46, 219) für ein anderes, drittes Polymermaterial und einem dritten Durchgangsweg (55, 220), der in den zweiten Kanal (42, 216) führt, ausgeformt ist, wobei die Vorrichtung weiterhin ein viertes Düsenblocksegment (6, 203) aufweist, das mit einem Sammelreservoir (48, 224) für ein Polymermaterial und einem Durchgangsweg (58, 225), der von dort in den ersten rohrförmigen Kanal (40, 211) stromabwärts von der Verbindungsstelle des Zweiten Kanals (42, 216) mit dem ersten Kanal (40, 211) führt, ausgeformt ist, und die Vorrichtung die Bildung einer Struktur gestattet, die eine thermoplastische strukturelle Polyolefinschicht umfasst, auf die in der Reihenfolge eine Klebmittelschicht, eine Sauerstoffsperrschicht und eine zweite Klebmittelschicht und eine zweite thermoplastische strukturelle Polyolefinschicht folgt, wobei die Klebmittelschichten und die Sperrschichten jeweils für sich dünn relativ zu den zwei strukturellen Schichten sind.

5. Eine Vorrichtung nach Anspruch 4, die weiterhin ein fünftes Düsenblocksegment (5, 205) umfasst, das mit einem Sammelreservoir (47, 221) für ein weiteres polymeres Material ausgeformt ist, wobei ein Durchgangsweg (57, 222) von dem Reservoir (47, 221) in den ersten rohrförmigen Kanal (40, 211) zwischen Verbindungsstellen von diesem mit dem zweiten Kanal (42, 216) und dem Durchgangsweg (58, 225) führt, welcher von dem Sammelreservoir (48, 224) des vierten Düsensegments (6, 203) ausgeht.

6. Vorrichtung nach Anspruch 1, gekennzeichnet durch
a. ein hohles Fließrohr (15, 208) mit einem hohlen Kernlochstift (12, 209) an einem Auslassendabschnitt der Vorrichtung;
b. einen segmentierten Düsenblock, der ein Extrusions-Düsenblocksegment (8, 202) an dem Endabschnitt der Vorrichtung umfasst und mit einer inneren Fläche ausgeformt ist, die mit dem Kernlochstift (12, 209) zusammenwirkt, um einen Gießkanal (40, 212) für den Strom aus mehrfachen Polymerschichten zu bilden, wobei das Extrusions-Düsenblocksegment (8) und der Kernlochstift (12, 209) auch eine ringförmige Düsenöffnung (23, 210) begrenzen, durch die ein mehrschichtiger Vorformling aus der Vorrichtung austritt, und
c. eine Vielzahl von Unterextrusions-Düsenblocksegmenten, die stromaufwärts von dem Extrusions-Düsenblocksegment (8) gelegen sind und wenigstens ein Haupt-Unterextrusions-Düsenblocksegment (7, 204) umfassen, das das Fließrohr umgibt, um mit diesem eine ringförmige Öffnung zu bilden, die den ersten rohrförmigen Kanal (40) für den Fluß von polymerem Material einer ersten oder Strukturschicht in dem Gießkanal bildet, und wenigstens zwei angrenzende Hilfs-Unterextrusions-Düsenblocksegmente (3, 4 oder 206, 207) umfassen, von denen jedes mit einem Sammelreservoir (44, 45 oder 215, 217) und Durchgangswegen, die von diesen zu dem zweiten Kanal (42 oder 216) führen, der schmaler als der erste rohrförmige Kanal (40, 211) ist, ausgeformt ist; wobei die besagten Durchgangswege zwischen gegenüberliegenden Oberflächen von benachbarten Unterextrusions-Düsenblocksegmenten (7, 3, 4 oder 204, 207, 206) begrenzt sind, und die Vorrichtung die Bildung eines Laminats gestattet, das dünne Schichten aus ersten und zweiten polymeren Materialien umfasst, welches Laminat nachher von dem zweiten Kanal (42, 216) vollständig um eine dicke Schicht aus polymerem Material in dem ersten rohrförmigen Kanal geleitet wird.

7. Eine Vorrichtung nach Anspruch 6, die wenigstens ein zusätzliches Unterextrusions-Düsenblocksegment (5, 205) umfaßt, das mit einem Sammelreservoir (46, 219) und einem Durchgangsweg (55, 220), der mit dem ersten rohrförmigen Kanal (40, 211) kommuniziert, ausgeformt ist.

8. Eine Vorrichtung nach Anspruch 6 oder Anspruch 7, die weiterhin ein Unterextrusions-Düsenblocksegment (4, 206) umfaßt, das mit einem Polymer-Sammelreservoir (46, 219) und einem Durchgangsweg (55, 220), der von dort in den zweiten Kanal (42, 216) führt, ausgeformt ist, und noch ein anderes Haupt-Unterextrusions-Düsenblocksegment (8, 202) umfaßt, das mit einem Sammelreservoir (48, 224) und einem Durchgangsweg (58, 225), der in den rohrförmigen Haupt-Kanal (40, 211) stromabwärts von der Verbindungsstelle, bei der der zweite Kanal den ersten Kanal trifft, führt, ausgeformt ist, wobei die Vorrichtung die Bildung eines Vorformlings gestattet, der eine innere thermoplastische strukturelle Polyolefinschicht (105) umfaßt, auf die nach außen eine erste Klebmittelschicht (109), eine zweite Sauerstoffsperrschicht (107), eine dritte Klebmittelschicht (113) und eine äußere thermoplastische strukturelle Polyolefinschicht (103) folgen, wobei die Klebmittel- und Sperrschichten relativ dünn im Vergleich zu den strukturellen Schichten sind.

9. Eine Vorrichtung nach Anspruch 8, die ein weiteres Haupt-Unterextrusions-Düsenblocksegment (5, 205) umfaßt, das mit einem Sammelreservoir (47, 221) und einem Durchgangsweg (57, 222), der in den rohrförmigen Kanal (40, 211) zwischen dessen Verbindungsstellen mit dem zweiten Kanal und dem Durchgangsweg (58, 225) für die äußere Strukturschicht führt, ausgeformt ist, wobei die Vorrichtung das Einschieben einer weiteren Schicht aus polymerem Material zwischen eine Strukturschicht und eine benachbarte Klebmittelschicht des Vorformlings gestattet.

10. Eine Vorrichtung nach einem der Ansprüche 6 bis 9, bei der das Fließrohr (15, 208) zylindrisch und programmierbar ist und mit einem zylindrischen Blasdorn (14) verbunden ist, der gleitend über das Programmrohr paßt, in dem das Fließrohr (15, 208) vertikal beweglich ist.

11. Vorrichtung nach Anspruch 10, bei der der erste rohrförmige Kanal (40, 211) ein ringförmiger Raum ist, der den Blasdorn (14) umgibt und durch eine Öffnung in wenigstens dem besagten einen Haupt-Unterextrusions-Düsenblocksegment (7, 204), durch das sich der Blasdorn (14) erstreckt, definiert und begrenzt ist, und die Durchgangswege, die sich von Sammelreservoiren der Unterextrusions-Düsenblocksegmente erstrecken, sich verjüngen.

12. Eine Vorrichtung nach einem der Ansprüche 1 bis 11, die weiterhin durch Einrichtungen (z.B. 65) zum Einstellen der Auslaßdüsenöffnung (23, 210), durch die der mehrschichtige Vorformling aus der Vorrichtung austritt, gekennzeichnet ist.

13. Ein Verfahren zur Herstellung eines mehrschichtigen polymeren Gegenstandes wie eines Vorformlings für die Verwendung beim Herstellen eines durch Blasformen ausgeformten Behälters, wobei der Gegenstand eine Vielzahl von Schichten aufweist, die jeweils dünner als wenigstens eine andere Schicht des Gegenstandes sind, bei dem ein Polymer, das eine dickere Schicht des Gegenstandes bilden soll, entlang eines ersten Kanals (40, 211) in Richtung auf eine Extrusionsdüsenöffnung (23, 210) geführt wird und mehrere Polymere, die dünnere Schichten des Gegenstandes bilden sollen, nacheinander einem zweiten rohrförmigen Kanal (42, 216) zugeführt werden, um ein Laminat aus den dünneren Polymerschichten darin zu bilden, ein Strom aus dem Polymer, daß die dickere Schicht bilden soll, in einem stromaufwärts gelegenen Abschnitt des ersten Kanals (40, 211) bereitgestellt wird und ein Strom aus dem Laminat aus den dünneren Schichten, das in dem zweiten Kanal (42, 216) gebildet wird, gezwungen wird, ins Zusammenfließen mit dem besagten Polymerstrom an einer Zwischenstelle entlang des ersten Kanals (40, 211) einzumünden, um dort einen mehrschichtigen Polymerstrom zu bilden, der eine Vielzahl aus dünneren Schichten und einer dickeren Schicht umfaßt, und der mehrschichtige Fließstrom entlang eines stromabwärts gelegenen Abschnittes des ersten Kanals (40, 211) zu der besagten Öffnung (23, 210) zur Extrusion aus dieser koextrudiert wird.

14. Ein Verfahren nach Anspruch 13, bei dem das besagte Laminat in dem zweiten Kanal (42, 216) gezwungen wird, vollständig um den Polymerfließstrom in dem ersten Kanal (40, 211) bei der Vereinigung mit diesem zu fließen, und entweder eine Schicht oder zwei weitere Polymerschichten, die dicker als die Laminatschichten sind, zum Zusammenfließen mit dem Laminat so gebracht wird bzw. werden, daß sie vollständig um dieses herum fließt bzw. fließen.

15. Ein Verfahren nach Anspruch 13 oder Anspruch 14, bei dem das in dem zweiten Kanal (42, 216) gebildete Laminat in der folgenden Reihenfolge eine Klebmittelschicht (109), eine Sperrschicht (107) und eine Klebmittelschicht (113) umfaßt und der koextrudierte Fließstrom, der sich entlang des stromabwärts gelegenen Abschnittes des ersten Kanals zu der Düsenöffnung (23, 210) vorschiebt, eine dickere Schicht umfaßt, die eine thermoplastische Polyolefinschicht (103 und/oder 105) enthält.

## Revendications

1. Appareil d'extrusion pour la production d'un article polymérique à plusieurs couches, telle qu'une paraison, qui comprend une pluralité de couches qui sont individuellement plus minces qu'au moins une autre couche de l'article, l'appareil incluant des moyens qui forment des canaux tubulaires d'extrusion séparée (40, 211, 42, 216), des moyens (43, 213) pour alimenter un premier matériau polymérique à un premier des canaux (40, 211) pour l'extrusion le long de ceux-ci vers un orifice d'extrusion (23, 210), de l'appareil pour former une couche relativement épaisse de l'article extrudé, et des moyens (44-46; 215, 217, 219) pour alimenter une pluralité de matériaux polymériques successivement vers un deuxième des canaux (42, 216) pour être extrudé de l'appareil en tant que couche plus mince de l'article, les canaux tubulaires séparés (40, 42, 211, 216) sont disposés les uns dans les autres dans un bloc de filières d'extrusion, le premier canal tubulaire (40, 211) comportant une portion amont dans laquelle le matériau polymérique formant une couche épaisse de l'article est alimenté pour produire un flux dudit matériau polymérique en direction de l'orifice (23, 201), et le deuxième canal tubulaire (42, 216) converge avec le premier canal tubulaire à un endroit intermédiaire le long de ce dernier pour confluer avec le flux de polymère et dans ce dernier, un stratifié tubulaire assemblé dans celui-ci et composé de minces couches de la pluralité de matériaux polymériques successivement introduit dans le deuxième canal, le premier canal (40, 211) ayant une portion aval s'étendant de la localisation intermédiaire où le deuxième canal converge avec le premier pour transporter vers l'orifice (23, 201), le flux de polymère à plusieurs couches comprenant ladite pluralité de couches plus minces et une couche plus épaisse.

2. Appareil selon la revendication 1, ayant en plus des moyens (48, 58; 47, 57; 221-223; 224-226) pour transporter au moins un autre flux de polymère tubulaire dans le premier canal (40, 211), le moyen supplémentaire confluant avec la portion en aval du premier canal utilisé pour amener ledit au moins un flux tubulaire dans la confluence avec le flux à plusieurs couches de celui-ci.

3. Appareil selon la revendication 1 ou 2, incluant un bloc de filières segmentées, les segments de celui-ci étant équipés de réservoirs d'accumulation de polymère (p.ex. 43 à 48, 213, 215, 217, 219, 221, 224), le bloc de filières étant formé autour du premier canal tubulaire (40, 211) qui est localisé dans le deuxième canal tubulaire (42, 216), à cet endroit se trouve un premier passage (52) menant vers le deuxième canal à partir d'un réservoir d'accumulation (44, 215) d'un premier segment (3, 207) qui est chargé avec un premier matériau polymérique dudit réservoir d'accumulation, et un second passage (53, 218) conduisant au deuxième canal à partir d'un réservoir d'accumulation (45, 217) d'un deuxième segment (3, 207) qui est chargé avec un deuxième matériau polymérique du dernier réservoir d'accumulation; le premier et le second passage étant définis entre des surfaces opposées de segment adjacent (7, 3 ; 3, 4 ; 204, 207 ; 207, 206), dans laquelle, pendant l'utilisation, un stratifié est formé endéans le deuxième canal (42, 216) composé du premier et du deuxième matériau polymérique, qui après ceci est alimenté autour du flux de matériau polymérique dans le premier canal tubulaire (40, 211).

4. Appareil selon la revendication 3, ayant un troisième segment de blocs de filières (4, 206) équipés d'un réservoir d'accumulations (46, 219) pour un autre troisième matériau polymérique et un troisième passage (55, 220) conduisant dans le deuxième canal (42, 216), de plus, l'appareil comprend un quatrième segment de bloc de filières (6, 203) équipé d'un réservoir d'accumulations (48, 224) pour un matériau polymérique et un passage (58, 225) conduisant de celui-ci dans le premier canal tubulaire (40, 211) en aval de la jonction du deuxième canal (42, 216) avec le premier canal (40, 211); l'appareil permettant la formation d'une structure comprenant une couche structurale de polyoléfine thermoplastique suivie dans l'ordre par une couche adhésive, une couche formant barrière à l'égard de l'oxygène, et une deuxième couche adhésive et une deuxième couche structurale en polyoléfine thermoplastique, les couches adhésives et barrières individuellement sont relativement minces par rapport aux deux couches structurales.

5. Appareil selon la revendication 4, qui inclut de plus un cinquième segment de blocs de filières (5, 205) équipé d'un réservoir d'accumulation (47, 221) pour un autre matériau polymérique, un passage (57, 222) conduisant du réservoir (47, 221) dans la jonction intermédiaire du premier canal tubulaire (40, 211) avec le deuxième canal (42, 216) et le passage (58, 225) conduisant du réservoir d'accumulation (48, 224) du quatrième segment de filières (6, 203).

6. Appareil selon la revendication 1, caractérisé par
a) un tube creux de flux (15, 208) ayant une broche à corps creux (12, 209) à la portion de décharge de l'appareil;
b) un bloc de filières segmentées comprenant un segment de blocs de filières d'extrusion (8, 202) à la portion finale de l'appareil qui est équipé d'un revêtement intérieur de surface avec la tige (12, 209) pour former un canal d'écoulement (40, 212) pour le flux des couches multiples de polymères, le segment de blocs de filières d'extrusion (8) et la tige (12, 209) définissant aussi un orifice annulaire (23, 210) à travers lequel une paraison à plusieurs couches sort de l'appareil, et
c) une pluralité de segments de blocs de filières de sous-extrusion localisée en amont du segment du bloc de filières d'extrusion (8) et comprenant au moins un segment de blocs de filières de sous-extrusion (7, 204) entourant le tube de flux pour former avec celui-ci une ouverture annulaire formant le premier canal tubulaire (40) pour le flux de la première ou couche structurale du matériau polymérique dans le canal d'évacuation et au moins deux segments de blocs de filières de sous-extrusion auxiliaires adjacents (3, 4 ou 206, 207) dont chacun est équipé d'un réservoir d'accumulation (44, 45 ou 215, 217) et les passages conduisant de ceux-ci vers le deuxième canal (42 ou 216) qui est plus étroit que le premier canal tubulaire (40, 211) ; lesdits passages étant définis entre les surfaces opposées de segments de blocs de filières de sous-extrusion adjacents (7, 3, 4 ou 204, 207, 206), l'appareil permettant la formation d'un stratifié comprenant des couches minces du premier et deuxième matériau polymérique, lequel stratifié est ensuite alimenté à partir du deuxième canal (42, 216) complètement autour de la couche épaisse de matière polymérique dans le premier canal tubulaire.

7. Appareil selon la revendication 6, comprenant au moins un segment de blocs de filières de sous-extrusion additionnelle (5, 205) équipés d'un réservoir d'accumulation (46, 219) et d'un passage (55, 220) qui communique avec le premier canal tubulaire (40, 211).

8. Appareil selon la revendication 6 ou 7, incluant en plus un segment de blocs de filières de sous-extrusion (4, 206) équipés d'un réservoir d'accumulation de polymère (46, 219) et d'un passage (55, 220) conduisant de celui-ci dans ledit deuxième canal (42, 216) et par un autre segment de blocs de filières de sous-extrusion principale (8, 202) équipés d'un réservoir d'accumulation (48, 224) et d'un passage (58, 225) conduisant dans le canal tubulaire principal (40, 211) en aval de la jonction à laquelle le deuxième canal rencontre le premier canal, l'appareil permettant la formation d'une paraison comprenant une couche intérieure structurale en polyoléfine thermoplastique (105) suivie de l'intérieur vers l'extérieur par une première couche adhésive (109), d'une deuxième couche (107) formant barrière à l'égard de l'oxygène, une troisième couche (113) adhésive et une couche (103) structurale extérieure en polyoléfine thermoplastique. Les couches adhésives et formant barrières étant relativement minces comparées auxdites couches structurales.

9. Appareil selon la revendication 8, incluant un segment de blocs de filières de sous-extrusion principale supplémentaire (5, 205) équipés d'un réservoir d'accumulation (47, 221) et d'un passage (57, 222) conduisant dans le premier canal tubulaire (40, 211) à l'endroit intermédiaire entre la jonction de celui-ci avec le deuxième canal et le passage (58, 225) pour la couche structurale extérieure, l'appareil permettant l'insertion d'une couche supplémentaire de matériaux polymériques entre la couche structurale et la couche adhésive adjacente de la paraison.

10. Appareil selon l'une quelconque des revendications 6 à 9, dans laquelle le tube de flux (15, 208) est cylindrique et programmable et est associé à un mandrin cylindrique (14) qui s'adapte sur le tube de programmation d'une manière coulissable, dans lequel le tube de flux (15, 208) est déplaçable verticalement.

11. Appareil selon la revendication 10, dans laquelle le premier canal tubulaire (40, 211) est un espace annulaire entourant le mandrin (14) et défini par une ouverture dans au moins un segment de blocs de filières de sous-extrusion principales (7, 204) à travers lequel le mandrin (14) s'étend, et les passages conduisant au réservoir d'accumulation des segments de blocs de filières de sous-extrusion sont effilés.

12. Appareil selon l'une quelconque des revendications 1 à 11, caractérisé en plus par les moyens (p.ex. 65) pour ajuster la taille de l'orifice (23, 210) de décharge à travers lequel la paraison à plusieurs couches sort de l'appareil.

13. Un procédé pour la fabrication d'un article polymérique à plusieurs couches, telle qu'une paraison pour l'utilisation dans la fabrication d'un conteneur en matière plastique moulé par soufflage, cet article a une pluralité de couches qui individuellement sont plus minces qu'au moins une autre couche de l'article dans lequel un polymère forme une couche épaisse de l'article qui est acheminé par un premier canal ( 40, 211) tubulaire vers un orifice de filière (23, 210) et une pluralité de polymères pour former des couches plus minces de l'article qui sont successivement acheminées vers un deuxième canal tubulaire (42, 216) pour former un stratifié de couches polymériques plus minces dans celui-ci, un flux de polymère pour former ladite couche plus épaisse et pourvu dans une portion en amont du premier canal (40, 211) et un flux dudit stratifié des couches plus minces formées dans le deuxième canal (42, 216) et fait converger en confluence avec ledit flux de polymère à une localisation intermédiaire située sur le premier canal (40, 211) pour former à cet endroit un flux de polymère à plusieurs couches incluant une pluralité de couches plus minces et une couche plus épaisse, le flux à plusieurs couches et co-extrudé le long d'une portion en aval du premier canal (40, 211) vers ledit orifice (23, 210) pour l'extrusion de celui-ci.

14. Procédé selon la revendication 13, dans laquelle ledit stratifié dans le deuxième canal (42, 216) est contraint à couler complètement autour du flux de polymère dans le premier canal (40, 211) suite à la convergence avec celui-ci, une couche ou deux couches supplémentaires plus épaisses de polymère que lesdites couches stratifiées sont amenées à confluer avec le stratifié de sorte à s'écouler totalement autour de celui-ci.

15. Un procédé selon les revendications 13 ou 14, dans lequel le stratifié formé dans le deuxième canal (42, 216) comprend dans l'ordre une couche adhésive (109), une couche faisant barrière (107) et une couche adhésive (113) et le flux co-extrudé procédant le long d'une portion en aval du premier canal vers l'orifice (23, 210) inclut une couche plus épaisse comprenant une couche de polyoléfine (103 et/ou 105).
